# EUROPÄISCHE PATENTSCHRIFT

(11) **EP 0 725 743 B1**
(45) Veröffentlichungstag und Bekanntmachung des Hinweises auf die Patenterteilung: **10.01.2001**
(21) Anmeldenummer: 94928762.7
(22) Anmeldetag: 11.10.1994
(51) Int. Cl.: B60R 25/00, B60R 16/02

(54) **FAHRZEUGSICHERUNGSANORDNUNG**
VEHICLE SECURITY ARRANGEMENT
SYSTEME DE PROTECTION POUR VEHICULE

(30) Priorität: 29.10.1993 DE 4336938; 27.04.1994 DE 4414644
(43) Veröffentlichungstag der Anmeldung: 14.08.1996
(60) Teilanmeldung: 00103136.8
(73) Patentinhaber: ROBERT BOSCH GMBH, 70442 Stuttgart (DE)
(72) Erfinder: DENZ, Helmut, D-70176 Stuttgart (DE); PISCHKE, Juergen, D-71287 Weissach (DE); FISCHER, Werner, D-71296 Heimsheim (DE); WICHTERICH, Johannes-Dieter, D-75417 Muehlacker (DE); RANDOLL, Helmut, D-71665 Vaihingen (DE); BURGER, Wilfried, D-71282 Hemmingen (DE); LAICHINGER, Martin, D-73061 Ebersbach (DE); GANTENBEIN, Reinhard, D-74372 Sersheim (DE); DIEBOLD, Bernd, D-77866 Rheinau (DE); TOCHTERMANN, Michael, D-74379 Ingersheim (DE)
(86) Internationale Anmeldenummer: DE9401189
(87) Internationale Veröffentlichungsnummer: WO9511820

(56) Entgegenhaltungen:
- EP-A- 0 231 607
- EP-A- 0 303 059
- EP-A- 0 367 728
- EP-A- 0 372 741
- WO-A-89/07815
- WO-A-93/05987
- WO-A-93/20490
- FR-A- 2 613 993
- GB-A- 2 051 442

## Beschreibung

### Stand der Technik

Die Erfindung geht aus von einer Sicherungsanordnung nach der Gattung des Hauptanspruchs. Eine bekannte Anordnung dieser Art (WO 93/05 987 A1) besteht aus einer Inbetriebnahmeeinrichtung mit einem Codeträger und einer Einrichtung zum Lesen des Codeträgers, einem mit dieser verbundenen Datenbus sowie mehreren mit dem Datenbus verbundenen Einheiten zur Steuerung von Fahrzeugfunktionen. Um letztere in Betriebsbereitschaft zu versetzen, sendet ihnen die Leseeinheit ein Codesignal, welches sie mit einem zuvor abgespeicherten Referenzcode vergleicht. Stimmen bei wenigstens einer Funktionssteuergerät der von der Leseeinheit empfangene und der vorab gespeicherte Referenzcode nicht überein, gibt es über den Datenbus ein Fehlersignal ab, welches je nach Bedeutung des betroffenen Geräts für die Fahrzeugfunktionen zur Stillsetzung des Fahrzeuges führt. Wollte ein Dieb diese bekannte Anordnung mittels einer eigenen Lese- und eigener Funktionssteuereinheiten umgehen, müsste er alle vorhandenen Einheiten auswechseln. Wegen des damit verbundenen großen Aufwandes, bietet die bekannte Anordnung einen hohen Schutz gegen Entwendung des Fahrzeuges. Für die Realisierung der beschriebenen Anordnung wurde allerdings von einem alle elektronischen Komponenten erfassenden Fahrzeugbus ausgegangen. Über einen derartigen Bus verfügen insbesondere zur Zeit in Betrieb befindliche Fahrzeuge noch nicht. Auch eignet sich ein solcher Bus zur Diagnose der angeschlossenen Einheiten nur bedingt, da bei der Bewertung aller Diagnosemeldungen stets vorausgesetzt werden muß, daß der Bus selber in Ordnung ist. Eine Diagnose des Buszustandes selbst ist nicht vorgesehen.

Aufgabe der vorliegenden Erfindung ist es, eine Fahrzeugsicherungsanordnung anzugeben, die bei Gewährleistung eines gleichwertigen Schutzes gegen unzulässige Benutzung eine möglichst einfache Hardwarestruktur aufweist und leicht als Ganzes oder zur Verbesserung bereits bestehender Sicherungsanordnungen auf vorhandene Fahrzeuge nachrüstbar ist.

Diese Aufgabe wird gelöst durch eine Anordnung mit den Merkmalen des unabhängigen Anspruchs 1. Eine mit den Merkmalen des Anspruchs 1 ausgestattete Sicherungsanordnung hat den Vorteil, daß sie neben ihrer bestimmungsgemäßen Verwendung zur Fahrzeugsicherung noch für andere Zwecke nutzbar ist. Solche Zwecke sind beispielsweise die Fahrzeugdiagnose mittels eines externen Motortesters oder die Implementierung neuer Software in ein Funktionssteuergerät mittels eines Applikationsgerätes. Ein sonst für diese Zwecke vorhandenes gesondertes Leitungssystem kann durch die Mehrfachnutzung entfallen.

Vorteilhafte Weiterbildungen und zweckmäßige Ausgestaltungen der erfindungsgemäßen Sicherungsanordnung sind in den Unteransprüchen angegeben.

Eine gemäß dem kennzeichnenden Merkmal des Anspruchs 2 aufgebaute Sicherungsanordnung macht sich die Tatsache zunutze, daß in vielen Fahrzeugen zu Diagnosezwecken ein Datenleitungssystem ohnehin vorhanden ist. Erfindungsgemäß wird dieses vorhandene Leitungssystem nun, wenn es nicht zu Diagnosezwecken verwendet wird, zur Fahrzeugsicherung eingesetzt. Da nur wenige zusätzliche Hardwarekomponenten benötigt werden, hat ein solches System den Vorteil, daß es leicht auf vorhandene Fahrzeuge nachrüstbar ist. Der dazu erforderliche Montageaufwand ist gering, insbesondere entfällt die Installation zusätzlicher Leitungen.

Während des normalen Fahrzeugbetriebs liegt die Kontrolle über das Datenleitungssystem bei dem Diebstahlschutzsteuergerät. Alternativ kann sie auch bei einem Funktionssteuergerät liegen. Dies ist vor allem dann zweckmäßig, wenn nur ein einzelnes Funktionssteuergerät, insbesondere das Motorsteuergerät, in die Funktion der Fahrzeugsicherung eingebunden ist, weitere Steuergeräte jedoch nicht.

Wird ein externes Gerät, insbesondere ein Motortester zu Diagnosezwecken an das Leitungssystem angeschlossen, übernimmt dieses die Kontrolle über die Datenkommunikation auf dem Datenleitungssystem. Das Datenleitungssystem besitzt eine genormte Inpedanz, welche auch bei angeschlossenem externen Gerät nicht verändert werden soll. Daher erfolgt das Umschalten zwischen Fahr- und Diagnosebetrieb zweckmäßig mittels eines im Diebstahlschutzsteuergerät angeordneten Schalters, welcher nach Erkennen des Anschlusses eines externen Geräts an das Leitungssystem eine im Diebstahlschutzsteuergerät angeordnete niederohmige Steuerverbindung zwischen Leitungssystem und Batteriespannung freischaltet.

Zur Vermeidung von Kommunikationskonflikten erfolgt ein uneingeschränkter Datenaustausch zwischen einem externen Gerät und den Funktionssteuergeräten bzw. dem Diebstahlschutzsteuergerät nur, wenn alle Steuergeräte vorher in vorbestimmter Weise richtig entriegelt wurden.

Um zum Beispiel im Rahmen einer Fahrzeuginspektion mit angeschlossenem Tester etwa einen Kaltstart protokollieren zu können, ist es zweckmäßig, im Fall, daß ein Tester angeschlossen wurde, zumindest eine einmalige Inbetriebnahme des Fahrzeugs ohne Prüfung der Berechtigung des Benutzers zuzulassen. Durch Begrenzung solcher Inbetriebnahmen ohne Berechtigung auf ein oder wenige Male werden Manipulationen des Fahrzeugs mittels eines Testers zum Zwecke eines Diebstahls wirksam unterbunden.

### Zeichnung

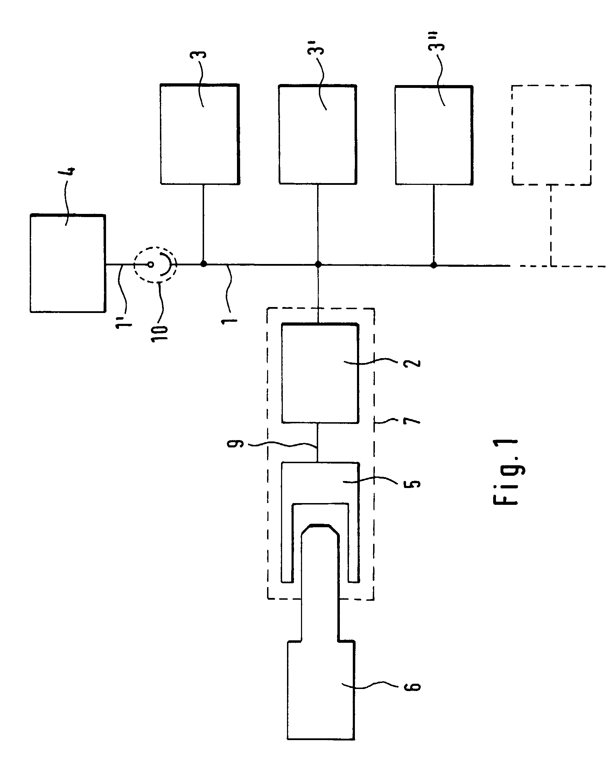

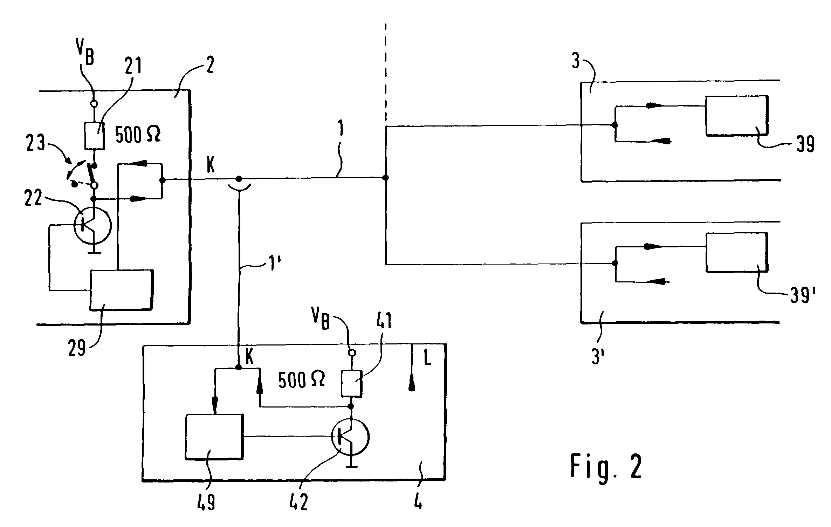

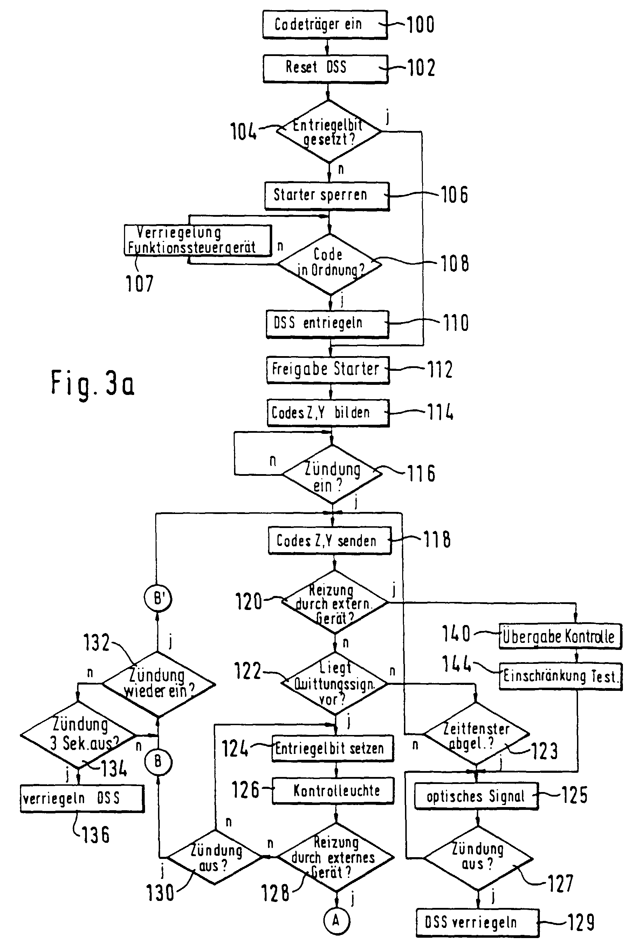

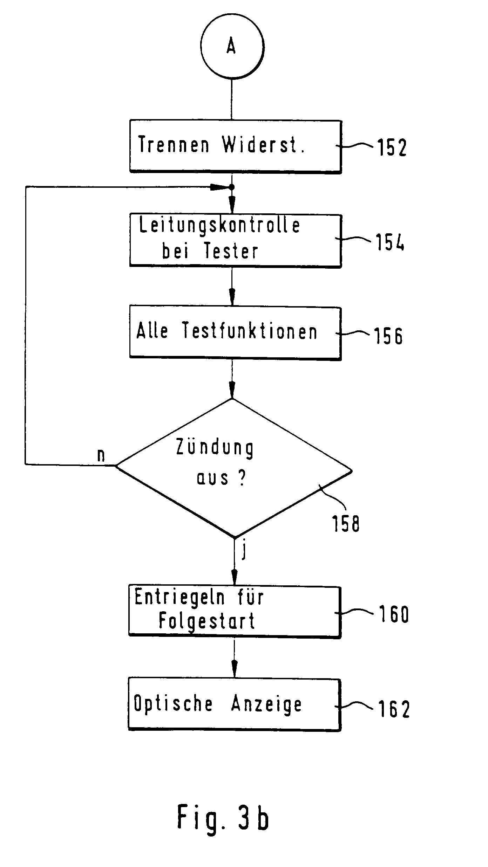

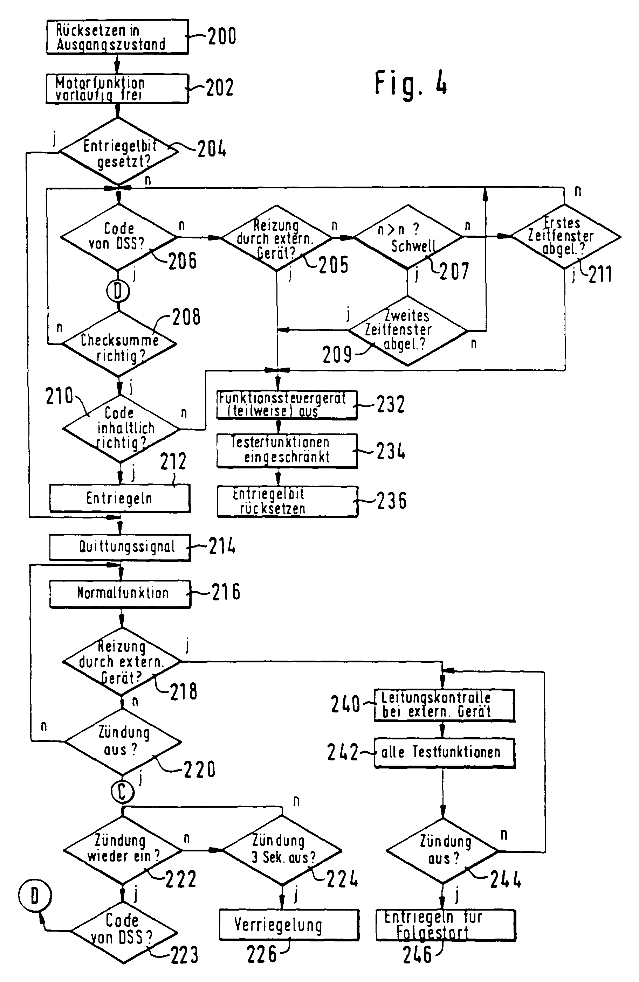

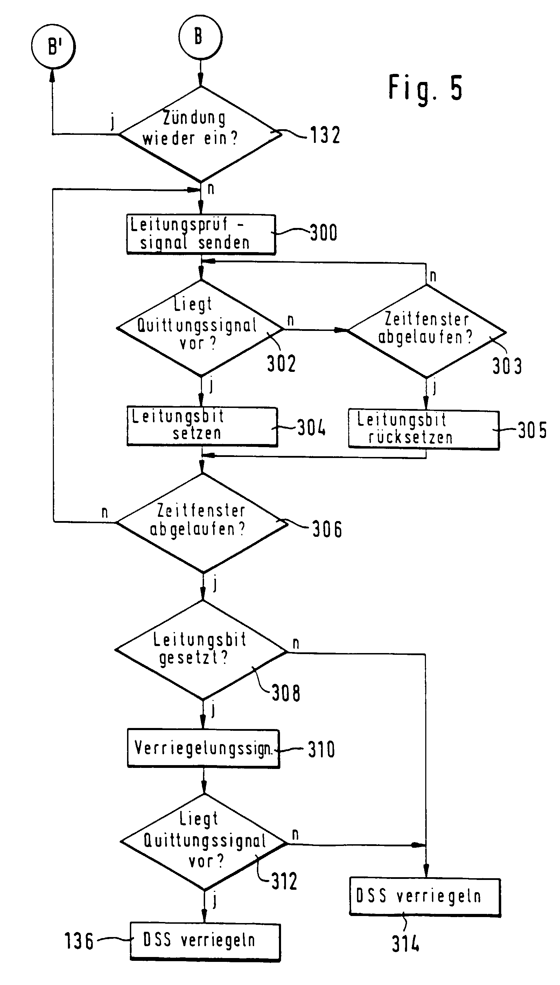

Es zeigen Figur 1 ein Blockschaltbild einer Fahrzeugsicherungsanordnung, Figur 2 eine schaltungstechnische Realisierung der Zuschaltung eines externen Geräts an die Fahrzeugsicherungsanordnung, Figur 3 die Funktion des zentralen Diebstahlschutzsteuergeräts in Form eines Flußdiagramms, Figur 4 die korrespondierende Funktionsweise des Funktionssteuergeräts in Form eines Flußdiagramms, Figuren 5, 6 und 7 Varianten der in Figur 3 beziehungweise 4 gezeigten Funktionsweisen.

### Beschreibung der Ausführungsbeispiele

Figur 1 zeigt die Hauptbestandteile einer Fahrzeugsicherungsanordnung.

Ein Codeträger 6, zum Beispiel eine Codekarte, ein Infrarotsender oder ein Schlüssel mit Transponder, und eine Code-Leseeinrichtung 5 bilden eine Inbetriebnahmeeinrichtung. Sie ist in der Regel im Innenraum des Fahrzeugs angeordnet. Mit der Leseeinrichtung 5 verbunden, in Figur 1 über eine Leitung 9, ist ein zentrales Diebstahlschutzsteuergerät 2 (DSS), zur Steuerung und Überwachung der Funktionen der Fahrzeugsicherungsanordnung. Diebstahlschutzsteuergerät 2 und Leseeinrichtung 5 können zweckmäßig auch zusammen in einer Steuerbaugruppe 7 angeordnet sein. Über eine Datenleitung 1 sind mehrere Funktionssteuergeräte 3, 3', 3'' zur Steuerung von Motor- oder anderen Fahrzeugfunktionen mit dem Diebstahlschutzsteuergerät 2 verbunden. Alle Funktionssteuergeräte 3, 3', 3'' sowie das zentrale Diebstahlschutzsteuergerät 2 verfügen jeweils über mindestens einen digitale Signale verarbeitenden integrierten Schaltkreis 29, 39, 39', 49, insbesondere in Form eines Mikroprozessors oder eines anwenderspezifischen integrierten Schaltkreises (ASIC), welcher einerseits zur Durchführung der Kommunikation mit den anderen Steuergeräten einschließlich dem Diebstahlschutzsteuergerät dient, und welcher andererseits jeweils gerätespezifische Funktionen ausführt, wie etwa im Falle des Motorsteuerungsgeräts die Bestimmung der Menge des einzuspritzenden Kraftstoffs, die Steuerung der Zündung usw. Weitere Steuergeräte dieser Art sind neben dem genannten Motorsteuerungsgerät etwa eine Getriebesteuerung 3' oder ein Antiblockier-/Antischlupfregelsystem 3''. Sind, wie in Figur 1 angenommen, mehrere Steuergeräte vorhanden, kommuniziert zweckmäßig eines von ihnen, üblicherweise das Motorsteuerungsgerät 3, mit dem Diebstahlschutzsteuergerät 2, während die weiteren an der Datenleitung 1 angeschlossenen Steuergeräte 3', 3'' diese Kommunikation nicht beachten. Ebenso möglich ist es, daß noch eines oder mehrere der weiteren Steuergeräte 3', 3'' ebenfalls im Rahmen der Ent-/Verriegelung des Fahrzeugs mit dem Diebstahlschutzsteuergerät 2 kommunizieren. Die "Masterfunktion", das heißt die Kontrolle über die Kommunikation liegt dabei zweckmäßig beim Diebstahlschutzsteuergerät 2. Erfolgt die Kommunikation zur Fahrzeuginbetriebnahme, wie nachfolgend angenommen, nur zwischen dem Diebstahlschutzsteuergerät 2 und einem einzigen Funktionssteuergerät 3, kann es zur Erhöhung der Betriebssicherheit aber auch sinnvoll sein, wenn das Funktionssteuergerät 3 die Masterfunktion wahrnimmt.

Im folgenden wird das mit dem Diebstahlschutzsteuergerät kommunizierende Steuergerät allgemein als Funktionssteuergerät 3 bezeichnet. An einer beliebigen, zweckmäßig nach Kriterien der Zugänglichkeit ausgewählten Stelle weist die Datenleitung 1 eine Schnittstelle, in einfacher Weise in Form eines Steckers zum Anschluß eines externen Geräts 4 auf. Ein solches Gerät kann insbesondere ein Tester zur Diagnose der Steuergeräte 2, 3, 3', 3'' oder ein Applikationsgerät zur Implementierung neuer Software in die Steuergeräte 2, 3, 3', 3'' sein. Das externe Gerät 4 ist mit dem Stecker 10 zweckmäßig über eine Datenleitung 1' verbunden, welche die fahrzeugseitige Datenleitung 1 fortsetzt. Als fahrzeugseitige Datenleitung 1 dient besonders bevorzugt die in zahlreichen Fahrzeugen ohnehin vorhandene Diagnoseleitung gemäß der ISO-Norm 9141. Physikalisch besteht sie entweder aus einer einzigen Leitung, der sogenannten K-Leitung, oder einem Leitungspaar, einer K-Leitung und einer L-Leitung. An die vorhandene Diagnoseleitung gemäß ISO-Norm 9141 wird zusätzlich das Diebstahlschutzsteuergerät 2 angeschlossen.

In Figur 2 ist veranschaulicht, wie im Falle der Nutzung einer vorhandenen K-Leitung als Datenleitung 1 eine gleichzeitige Anbindung des Diebstahlschutzgeräts 2 und eines externen Geräts 4 an die Datenleitung 1 erfolgen kann. Um digitale Signale auf die Datenleitung 1 einspeisen zu können, besitzen sowohl das Diebstahlschutzsteuergerät 2 wie das externe Gerät 4 jeweils eine aus einem Widerstand 21 beziehungsweise 41, dessen Wert in Figur 2 gemäß ISO-Norm 9141 500 Ohm beträgt, sowie Schaltmitteln 22 beziehungsweise 42, in der Regel in Form von Transistoren, bestehende Reihenschaltung, welche zwischen dem Potential der Fahrzeug-Batteriespannung U_{B} und Masse angeordnet ist. Die Schaltmittel 22,42 werden jeweils von dem im zugehörigen Steuergerät 2, 4 vorhandenen digitale Signale verarbeitenden Schaltkreis 29, 49 betätigt. Je nach Schaltzustand liegt auf der Datenleitung 1,1' ein "High"- oder ein "Low"-Pegel an. Bei dem Diebstahlschutzsteuergerät 2 weist die Reihenschaltung 21,22 zusätzlich noch einen Schalter 23 auf, welcher das Abtrennen von der Batteriespannung U_{B} gestattet. Der in Figur 2 angedeutete elektronische Aufbau ist selbstverständlich auch für solche Realisierungen nutzbar, die nicht auf Verwendung der K- beziehungsweise der K- und L-Diagnoseleitung beruhen.

Nachfolgend wird die Funktion der in den Figuren 1 und 2 dargestellten Anordnung erläutert. Die Kommunikation zur Fahrzeugsicherung erfolgt zwischen dem Diebstahlschutzsteuergerät 2 und dem Funktionssteuergerät 3, in der Regel dem Motorsteuerungsgerät. Eventuell weitere an der Datenleitung 1 angeschlossene Steuergeräte 3', 3'' sollen im Ausführungsbeispiel nicht an der Kommunikation beteiligt sein. Die Kontrolle über die Kommunikation liegt beim Diebstahlschutzsteuergerät 2.

Der Ablauf einer erfindungsgemäßen Verwendung der vorgeschlagenen Fahrzeugsicherungsanordnung ist in den Figuren 3 bis 6 in Form von Flußdiagrammen dargestellt.

Figur 3 veranschaulicht zunächst die Einzelmaßnahmen im zentralen Diebstahlschutzsteuergerät 2.

Ein zu sicherndes Fahrzeug befinde sich zunächst in Ruhestellung. Wird aus dieser Position heraus ein Codeträger 6 in die Leseeinrichtung 5 eingeführt, Schritt 100, sendet diese über die Datenleitung 9 ein Signal an das Diebstahlschutzsteuergerät 2, welches sich daraufhin in eine definierte Ausgangsposition zurücksetzt, Schritt 102. Durch Rücksetzen zu Beginn des Entriegelungsprozesses wird auch sichergestellt, daß das Fahrzeug auch dann nicht in Betrieb genommen werden kann, wenn im Diebstahlschutzsteuergerät durch geeignete Manipulation vor der Inbetriebnahme eine die korrekte Entriegelung anzeigende Information erzeugt wurde. In einer Variante kann das Rücksetzen durch den Anstieg der Versorgungsspannung nach Einschalten der Zündung ausgelöst werden. Nach erfolgtem Rücksetzen prüft das Diebstahlschutzsteuergerät 2, Schritt 104, ob in einem, zweckmäßig im Schaltkreis 29 in Form eines Dauer-RAM's oder eines EEPROMS vorhandenen Permanentspeicher eine Entriegelungsinformation, welche anzeigt, daß das Fahrzeugsicherungsanordnung ordnungsgemäß entriegelt wurde, vorhanden ist. Im weiteren wird angenommen, daß die Entriegelungsinformation durch Setzen eines Entriegelungsbits gegeben ist. Es ist im Regelfall nicht gesetzt, woraufhin das Diebstahlschutzsteuergerät 2 im Schritt 106 den Motorstarter zunächst sperrt. Anschließend, Schritt 108, prüft es die Inbetriebnahmeberechtigung des den Codeträger 6 handhabenden Benutzers. Dies geschieht in der Regel durch Vergleich des auf den Codeträger 6 angeordneten Codes mit einem zuvor in der Leseeinrichtung 5 oder im Diebstahlschutzsteuergerät abgespeicherten Code. Ist das Ergebnis der Inbetriebnahmeberechtigungsprüfung negativ, erzeugt das Diebstahlschutzsteuergerät 2 zweckmäßig im Schritt 107 ein zur Verriegelung des Funktionssteuergeräts 3 führendes Signal. Ist das Ergebnis der Inbetriebnahmeberechtigungsprüfung positiv, entriegelt sich das Diebstahlschutzsteuergerät 2, Schritt 110, und gibt anschließend den Starter frei, Schritt 112.

Stellt das Diebstahlschutzsteuergerät 2 im Schritt 104 fest, daß das Entriegelungsbit gesetzt ist, gibt es direkt den Starter vorläufig frei, Schritt 112. In einer Variante kann vorgesehen sein, daß der Starter erst nach einer Verzögerungszeit freigegeben wird, innerhalb derer die Entriegelung vollständig ablaufen kann.

An die vorläufige Freigabe des Starters schließt sich ein Datenaustausch zur Entriegelung des Motorsteuerungsgerätes 3 an. Hierzu bildet das Diebstahlschutzsteuergerät 2 im Schritt 114 zunächst einen Entriegelungs-Basiscode Z, vorzugsweise in Form einer Zufallszahl. Aus dieser leitet es weiterhin, bevorzugt durch Anwendung eines vorabgespeicherten Algorithmus auf den Basiscode Z einen Entriegelungscode Y ab.

Weiterhin prüft Diebstahlschutzsteuergerät 2, Schritt 116, ob die Zündung eingeschaltet wurde, in einfacher Weise durch Prüfung, ob ein Zündkontakt geschlossen wurde. Wurde die Zündung eingeschaltet sendet es im Schritt 118 die Codes Z und Y an das Funktionssteuergerät 3. Im sich anschließenden Schritt 120 prüft es, ob eine Reizung durch ein externes Gerät 4 auf der Datenleitung 1 vorliegt. Im Normalfall liegt ein solches Signal nicht vor. Das Diebstahlschutzsteuergerät 2 prüft dann im Schritt 122, ob vom Funktionssteuergerät 3 ein eine korrekte Entriegelung anzeigendes Quittungssignal zurückgesendet wurde. Liegt ein Quittungssignal vor, setzt es im Schritt 124 das Entriegelbit. Die somit erfolgte korrekte Inbetriebnahme des Fahrzeugs wird dem Benutzer zweckmäßig angezeigt, indem zum Beispiel eine während der Entriegelungsphase leuchtende Kontrolleuchte im Schritt 126 ausgeschaltet wird.

Während der Dauer des damit freigegebenen Fahrzeugbetriebs prüft das zentrale Diebstahlschutzsteuergerät 2 zyklisch Schritt 128, ob eine Reizung durch ein externes Gerät 4 auf der Datenleitung 1 vorliegt. Liegt ein solches Signal nicht vor, prüft es im Schritt 130, ob ein das Ende des Fahrzeugbetriebs anzeigendes Signal vorliegt, indem insbesondere der Benutzer die Zündung ausgeschaltet hat. Ist das Ergebnis dieser Prüfung negativ, das heißt soll der Fahrzeugbetrieb fortgesetzt werden, werden die Schritte 124 bis 130 zyklisch wiederholt.

Ist das Ergebnis der Prüfung im Schritt 130 positiv, liegt also ein das Ende des Fahrzeugbetriebs anzeigendes Signal vor, startet das Diebstahlschutzsteuergerät 2 einen Zähler, welcher durch Hochzählen bis zu einem vorgegebenen Wert ein Nachlauf-Zeitfenster definiert. Dessen Größe beträgt zweckmäßig etwa 1 bis 3 Sekunden. Anschließend prüft es im Schritt 132, ob die Zündung wieder eingeschaltet wurde. Ist das Ergebnis negativ, prüft es im Schritt 134, ob die Nachlaufzeit, d.h. das zuvor gestartete Zeitfenster bereits abgelaufen ist. Ist dies noch nicht geschehen, werden die Schritte 132 und 134 wiederholt. Ist das Zeitfenster abgelaufen, verriegelt sich das Diebstahlschutzsteuergerät 2 im Schritt 136, wobei das Entriegelungsbit rückgesetzt wird. Zweckmäßig wird dieser Zustand dem Benutzer wiederum optisch, etwa durch eine im Fahrzeug angeordnete Kontrolleuchte angezeigt, welche zum Beispiel langsam blinkt. Das Fahrzeug ist in diesem Falle bestimmungsgemäß stillgesetzt und verriegelt.

Ist das Ergebnis der Prüfung im Schritt 132 positiv, dieser Fall liegt etwa vor, wenn die Zündung innerhalb der durch das Zeitfenster vorgegebenen Zeit wieder eingeschaltet wurde, aber insbesondere auch, wenn während des Fahrzeugbetriebs ein kurzzeitiger Ausfall der Netzspannung aufgetreten ist, wiederholt das Diebstahlschutzsteuergerät 2 die Schritte 118 fortfolgend.

Gleichzeitig mit dem Absenden der Codes Z und Y an das Funktionssteuergerät 3 im Schritt 118 startet das Diebstahlschutzsteuergerät 2 ein weiteres Zeitfenster, welches zweckmäßig 5 bis 20 Sekunden beträgt. Liegt im Schritt 122 ein Quittungssignal von dem Funktionssteuergerät 3 noch nicht vor, prüft das Diebstahlschutzgerät 2 im nächsten Schritt 123, ob das im Schritt 118 gestartete Zeitfenster bereits abgelaufen ist. Ist dies nicht der Fall, wiederholt es die Schritte 118 bis 123. Ist das Zeitfenster abgelaufen, signalisiert es dies dem Benutzer wiederum zweckmäßig optisch, etwa durch eine im Fahrzeug angeordnete Leuchte, welche zum Beispiel schnell blinkt. Im Schritt 127 prüft das Diebstahlschutzsteuergerät 2, ob die Zündung ausgeschaltet wurde. Ist das Ergebnis dieser Prüfung negativ, das heißt ist die Zündung unverändert eingeschaltet, wiederholt es die Schritte 125 und 127 solange, bis die Zündung ausgeschaltet wird. Danach verriegelt es sich im Schritt 129.

Nachfolgend wird die Funktionsweise der Fahrzeugsicherungsanordnung für den Fall erläutert, daß ein externes Gerät 4, von dem im folgenden angenommen wird, daß es ein Motortester sei, an die Datenleitung 1 angeschlossen wird.

Physikalisch bedeutet der Anschluß eines Motortesters 4 die Herstellung einer zu der im Diebstahlschutzsteuergerät 2 vorhandenen parallelen niederohmigen Anbindung der Datenleitung 1,1' an die Batteriespannung U_{B}. Dies kann auf der Datenleitung 1,1' bezüglich der darauf stattfindenden Kommunikation zu undefinierten Signalen und damit zu Fehlfunktionen führen. Vor Übernahme der Kontrollfunktion über die Datenleitung 1,1' durch ein externes Gerät muß deshalb die Entriegelungskommunikation abgeschlossen sein. Stellt das Diebstahlschutzsteuergerät 2 bei der Prüfung im Schritt 120 fest, daß noch bevor ein Quittungssignal vom Funktionssteuergerät 3 empfangen wurde, ein externes Gerät 4 an die Datenleitung 1,1' angeschlossen wurde und auf der Datenleitung 1,1' ein Reizsignal erzeugt, trennt es den Widerstand 21 mittels des Schalters 23 von der Batteriespannung U_{B}, beendet die Kommunikation mit dem Funktionssteuergerät 3 und übergibt die Kontrollfunktion über die Datenleitung 1 an den Motortester 4, Schritt 140. Da die Entriegelung in diesem Falle nicht vorschriftsgemäß abgeschlossen wurde, steht die Funktionalität des Diebstahlschutzsteuergeräts 2 zweckmäßig jedoch nur eingeschränkt, zum Beispiel auf das Auslesen von Fehlerspeichern, zur Verfügung, Schritt 144. Wegen der nicht korrekt abgeschlossenen Entriegelung werden anschließend die Schritte 125 bis 129 ausgeführt.

Um Fehlfunktionen und/oder Botschaftskonflikte auf der Datenleitung 1,1' zu vermeiden, leitet das externe Gerät 4 zweckmäßig unmittelbar nach Anschluß an die Datenleitung 1 die Übernahme der Kontrolle über die Kommunikation auf der Datenleitung 1 ein. Dazu speist es ein Reizsignal auf die Datenleitung 1 ein, welches vom Diebstahlschutzsteuergerät 2 und Funktionssteuergerät 3 erkannt wird.

Besteht diese nur aus einer K-Leitung und genügt der Datenaustausch über die Datenleitung 1, 1' der ISO-Norm 9141, ist das Reizsignal zweckmäßig ein 200 Millisekunden langes Low-Pegel-Signal, entsprechend einer Reizung mit 5 Baud.

Besteht die Datenleitung 1 aus einer K- und einer L-Leitung gemäß ISO-Norm 9141, erfolgt die Reizung auf beiden Leitungen. Das Diebstahlschutzsteuergerät 2 erkennt dann auf der L-Leitung die Reizung durch das externe Gerät 4 und führt die nachfolgenden Schritte aus.

Stellt das Diebstahlschutzsteuergerät 2 erst nach vorschriftsmäßig abgeschlossenem Kommunikationsaufbau mit dem Funktionssteuergerät 3 im Schritt 128 fest, daß eine Reizung durch einen Motortester beziehungsweise ein anderes externes Gerät 4 vorliegt, trennt es im Schritt 152 mittels des Schalters 23 den Widerstand 21 von der Batteriespannung U_{B} und übergibt die Kontrolle des Datenaustausches über die Datenleitung 1, 1' an den Motortester 4, Schritt 154.

Da die Testerreizung jetzt nach korrekter Entriegelung erfolgte, stehen alle Testerfunktionen zur Verfügung, Schritt 156. Während des Testerbetriebs prüft das Diebstahlschutzsteuergerät 2 fortlaufend im Schritt 158, ob die Zündung ausgeschaltet wurde. Solange dies nicht der Fall ist, bleibt die Testerfunktion aufrechterhalten. Ergibt die Prüfung, daß die Zündung ausgeschaltet wurde, setzt das Diebstahlschutzsteuergerät 2 im Schritt 160 das Entriegelbit, um ein ein- oder begrenzt mehrmaliges, zum Beispiel dreimaliges Inbetriebnehmen des Fahrzeugs ohne Legitimationsprüfung zu ermöglichen. Dies ist zum Beispiel erforderlich, wenn in einer Werkstatt Startvorgänge untersucht werden sollen, wobei vom Zeitpunkt des Einschaltens der Zündung an Signale über den Motortester 4 ausgelesen werden. Das Setzen des Entriegelungsbits wird dem Fahrer wiederum zweckmäßig optisch, vorzugsweise durch eine Leuchte im Schritt 162 angezeigt.

Figur 4 zeigt die zu den Abläufen im Diebstahlschutzsteuergerät 2 korrespondierenden Abläufe im Funktionssteuergerät 3, ebenfalls in Form eines Flußdiagramms.

Mit dem Einschalten der Zündung, im allgemeinen realisiert durch Schließen eines Kontaktes, ergeht an das Funktionssteuergerät 3 ein entsprechendes Signal. Das Funktionssteuergerät 3 setzt sich daraufhin im Schritt 200 zunächst in einen vorgegebenen Ausgangszustand zurück. Im Schritt 202 gibt es die Motorsteuerfunktion, zum Beispiel die Einspritzsteuerfunktion vorläufig frei. Im anschließenden Schritt 204 prüft es, ob in einem Permanentspeicher, welcher wiederum zweckmäßig als Dauer-RAM oder EEPROM ausgeführt ist, ein Entriegelungsbit gesetzt ist. Dies ist in der Regel nicht der Fall. Daraufhin erfolgt im nächsten Schritt 206 die Prüfung, ob vom Diebstahlschutzsteuergerät 2 ein Entriegelungscode, bestehend aus den im Schritt 114 gebildeten Codes Z und Y empfangen wurde. Wurde, was bei korrekter Entriegelung mit dem vorgesehenen Codeträger 6 der Fall ist, ein Entriegelungscode empfangen, wird zunächst durch Checksummenprüfung, Schritt 208, seine richtige Übertragung abgesichert, anschließend wird er auf seine inhaltliche Richtigkeit hin überprüft, Schritt 210. Das Funktionssteuergerät 3 bildet hierzu aus dem übersendeteten Basiscode Z in gleicher Weise wie das Diebstahlschutzsteuergerät 2, vorzugsweise also mittels eines mit dem im Diebstahlsteuergerät 2 verwendeten übereinstimmenden Algorithmus einen abgeleiteten Code Y', welches es mit dem übersendeten Basiscode Y vergleicht. Stimmen beide Codes Y, Y' überein, ist die Fahrzeuginbetriebnahme zulässig. In diesem Fall entriegelt sich das Funktionssteuergerät 3 im Schritt 212 und sendet im Schritt 214 ein Quittungssignal an das Diebstahlschutzsteuergerät 2. Gleichzeitig speichert es eine den Entriegelungszustand anzeigende Information vorzugsweise redundant in einem im Funktionssteuergerät 3 vorhandenen Permanentspeicher. Für das Ausführungsbeispiel wird angenommen , daß hierzu, analog zum Diebstahlschutzsteuergerät in Schritt 124, im Schritt 214 ein Entriegelbit gesetzt wird. Das Fahrzeug wird nun in Normalfunktion, Schritt 216, betrieben. Es wurde ordnungsgemäß entriegelt.

Gleichzeitig mit der Prüfung im Schritt 206, startet das Funktionssteuergerät 3 einen Zähler, der durch Hochzählen bis zu einer vorgegebenen Zahl ein Zeitfenster definiert. Der Zählerstart kann auch bereit früher, beispielsweise in Schritt 202 erfolgen. Zweck des Zeitfensters ist es, zu verhindern, daß ein unrechtmäßiger Benutzer genügend Zeit zur Manipulation der Sicherheitseinrichtung erhält.

Ergibt die Prüfung in Schritt 206 oder 208, daß ein Code nicht empfangen wurde beziehungsweise die Checksumme falsch ist, prüft das Funktionssteuergerät 3 im Schritt 205, ob eine Reizung durch einen Motortester 4 vorliegt. Ist dies nicht der Fall, prüft es im Schritt 207, ob der Motor eine vorgegebene Drehzahlschwelle überschritten hat. Die Drehzahlschwelle entspicht vorzugsweise der sogenannten Startendedrehzahl, d.h. einer charakteristischen Drehzahl, die der Motor am Ende der Startphase erreicht haben sollte. Dabei startet das Funktionssteuergerät 3 gleichzeitig einen weiteren Zähler, welcher durch Hochzählen bis zu einer vorgegebenen Zahl ein zweites Zeitfenster definiert. Seine Länge ist so gewählt, zum Beispiel eine Sekunde, daß ein unrechtmäßiger Benutzer das Fahrzeug durch Betätigen des Starters nicht über eine große Strecke bewegen kann. Hat der Motor die Drehzahlschwelle erreicht, prüft das Funktionssteuergerät 3 im Schritt 209, ob das zweite, im Schritt 207 gestartete Zeitfenster abgelaufen ist. Solange dies nicht geschehen ist, werden die Schritte 206, 205, 207 und 209 wiederholt. Treten während des Motorstarts Störungen auf und erreicht der Motor dadurch die Drehzahlschwelle nicht, wird bei stehendem Motor geprüft, ob das erste, größere Zeitfenster von zum Beispiel 3 Sekunden abgelaufen ist, Schritt 211. Ist dies nicht der Fall, werden die Schritte 206, 205, 207, 211 wiederholt. Eine Möglichkeit, die beiden in den Schritten 209 und 211 Zeitfenster mit einem Zähler zu realisieren, besteht darin, daß erste Zeitfenster nur laufen zu lassen, solange die Motordrehzahl den Wert 0 hat. Wird die Drehzahl größer als 0, oder werden bestimmte Änderungen der Bordnetzspannung erkannt, wird der Zähler jeweils neu gestartet.

Ergibt die Prüfung im Schritt 205, daß ein Reiz durch einen Motortester 4 vorliegt, schaltet das Funktionssteuergerät 3 seine Funktionen ganz oder teilweise aus, Schritt 232, so daß auch die Motortesterfunktionen gegebenenfalls nur eingeschränkt zur Verfügung stehen, Schritt 234. Es setzt ferner im Schritt 236 das Entriegelbit zurück, und speichert in einem Permanentspeicher eine entsprechende Statusmeldung, welche zum Beispiel über einen Motortester auslesbar ist.

Ebenso mit Durchführung der Schritte 232 bis 236 reagiert das Funktionssteuergerät 3, wenn die Prüfung in den Schritt 209 oder 211 ergibt, daß eines der im Schritt 205 gesetzten Zeitfenster abgelaufen ist, oder wenn im Schritt 210 ein falscher Code vorlag. In diesen Fällen ist von einem Versuch einer unberechtigten Benutzung auszugehen, zweckmäßig wird wiederum eine entsprechende Statusmeldung im Permanentspeicher eingetragen.

Stellt das Funktionssteuergerät 3 im Schritt 218 fest, daß eine Reizung durch einen Motortester auf der Datenleitung 1, 1' anliegt, führt es die Schritte 240 bis 244 aus, welche den durch das Diebstahlschutzsteuergerät 2 ausgeführten Schritten 154 bis 158 entsprechen. Stellt es im Schritt 244 fest, daß die Zündung ausgeschaltet wurde, setzt es analog zum Schritt 160 ein Entriegelbit, Schritt 246, welches eine ein- oder gemäß vorgegebener Anzahl mehrmalige Inbetriebnahme des Fahrzeugs ohne Legitimationsprüfung gestattet. Ergibt die Prüfung im Schritt 204, daß ein Entriegelbit gesetzt ist, führt das Funktionssteuergerät 3 unmittelbar den Schritt 214 aus und sendet ein Quittungssignal an das Diebstahlschutzgerät 2. Zur Beendigung des Normalbetriebs schließen sich die Schritte 220, 222, 224 und 226 an, welche den Schritten 130 bis 136 in der Figur 3 entsprechen. Stellt dabei das Steuergerät 3 im Schritt 222 fest, daß die Zündung innerhalb des vorgegebenen Zeitfensters, dessen Größe zum Beispiel 2 Sekunden beträgt, wieder eingeschaltet wurde, prüft es, Schritt 223, ob ein Entriegelungscode vom Diebstahlschutzsteuergerät 2 vorliegt. Ist dies nicht der Fall, fährt es mit Schritt 224 fort und prüft, ob das Zeitfenster abgelaufen ist. Entsprechend verriegelt es sich anschließend, Schritt 226, oder wiederholt Schritt 222. Liegt ein Entriegelungscode dagegen vor, fährt es mit Schritt 208 fortfolgend fort.

Um zusätzlich sicherzustellen, daß ein Verriegelung nicht störungsbedingt während des Fahrbetriebes erfolgen kann, kann vor Durchführung des Schrittes 232 noch eine Prüfung vorgesehen sein, ob die Motordrehzahl unter einem vorgegebenen Grenzwert liegt. Nur, wenn dies zutrifft, wird die Verriegelung ausgeführt, anderenfalls wird die Funktion beibehalten.

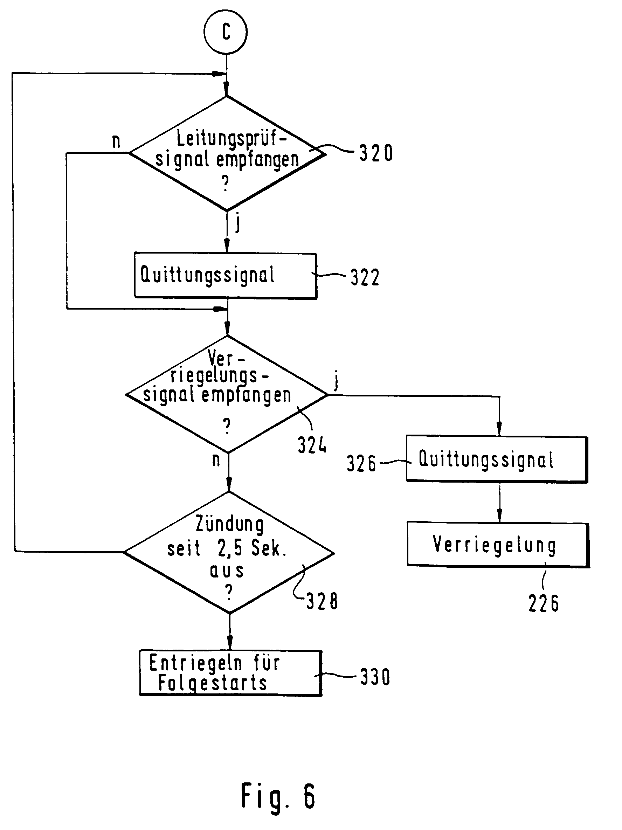

Eine vorteilhafte Weiterbildung der anhand der Figuren 3 und 4 beschriebenen Anordnung besteht darin, die Ausschaltroutine gemäß den Schritten 132, 134, 136 in Figur 3 beziehungsweise 222 bis 226 in Figur 4 durch Maßnahmen zur Diagnose der Datenleitung 1 zu ergänzen. Eine solche Ergänzung ist in Figur 5 für die Seite des Diebstahlschutzsteuergeräts 2, in Figur 6 für die Seite des Funktionssteuergeräts 3 dargestellt.

Wie Figur 5 entnehmbar, sendet das Diebstahlschutzsteuergerät 2 zur Leitungsdiagnose unmittelbar im Anschluß an die Prüfung in Schritt 130, ob die Zündung ausgeschaltet wurde, ein Leitungsprüfsignal an das Funktionssteuergerät 3, Schritt 300. Anschließend prüft es, Schritt 302, ob vom Motorsteuerungsgerät 3 ein Quittungssignal eingetroffen ist. Ist dies der Fall, setzt es im Schritt 304 ein Leitungsbit, welches anzeigt, daß die Datenleitung 1 in Ordnung ist. Danach prüft es im Schritt 306, ob das im Schritt 130 gesetzte Zeitfenster bereits abgelaufen ist, und wiederholt, solange dies nicht geschehen ist, die Schritte 300 bis 306.

Ergibt die Prüfung im Schritt 306, daß das Zeitfenster abgelaufen ist, wird im nächsten Schritt 308 geprüft, ob das den Zustand der Datenleitung 1 bezeichnende Leitungsbit gesetzt wurde. Ist dies der Fall, sendet das Diebstahlschutzsteuergerät 2 im Schritt 310 ein Verriegelungssignal an das Funktionssteuergerät 3 und prüft im nächsten Schritt 312, ob von diesem ein Quittungssignal eingetroffen ist. Ist das Ergebnis dieser Prüfung positiv, folgt im Schritt 136 die Beendigung des Fahrzeugbetriebs durch Rücksetzen des Entriegelungsbits und optische Anzeige durch eine im Fahrzeug angeordnete Lampe.

Stellt das Diebstahlschutzsteuergerät 2 im Schritt 302 fest, daß ein Quittungssignal auf das Leitungsprüfsignal nicht vorliegt, prüft es zunächst im Schritt 303, ob ein mit der Sendung des Leitungsprüfsignals im Schritt 300 gestartetes Zeitfenster abgelaufen ist. Ist dies nicht der Fall, wiederholt es zunächst Schritt 302 und anschließend gegebenenfalls Schritt 303.

Ergibt die Prüfung im Schritt 303, daß das Zeitfenster abgelaufen ist, liegt ein Fehler in der Datenleitung 1 vor. Das Diebstahlschutzsteuergerät 2 setzt deshalb das Leitungsbit zurück. Anschließend führt es Schritt 306 aus. Ist das Leitungsbit auch nach Ablauf des Zeitfensters im Schritt 306 zurückgesetzt, verriegelt sich das Diebstahlschutzsteuergerät 2 im Anschluß an den Schritt 308 im Schritt 314. Den fehlerhaften Leitungszustand zeigt es dem Fahrzeugbenutzer zweckmäßig optisch an. Dies kann wiederum etwa durch eine im Fahrzeug angeordnete Leuchte geschehen, welche in einer vorgegebenen Art und Weise blinkt.

Figur 6 zeigt die zu dem in Figur 5 wiedergegebenen Flußdiagramm korrespondierenden Abläufe auf der Seite des Funktionssteuergeräts 3. Nach Ausschalten der Zündung im Schritt 220 prüft dieses zunächst im Schritt 320, ob ein Leitungsprüfungssignal vom Diebstahlschutzsteuergerät 2 empfangen wurde. Ist dies der Fall, sendet es, Schritt 322, ein Quittungssignal. Im nächsten Schritt 324 prüft das Funktionssteuergerät 3, ob ein Verriegelungssignal vom Diebstahlschutzsteuergerät 2 empfangen wurde. Diesen Schritt führt es auch aus, wenn das Ergebnis der Prüfung im Schritt 320 negativ ist. Wurde kein Verriegelungssignal empfangen, prüft es im Schritt 328, ob ein mit dem Schritt 220 gestartetes Zeitfenster, dessen Länge zweckmäßig 1 bis 3 Sekunden beträgt, abgelaufen ist, und wiederholt die Schritte 320 bis 328, wenn dies nicht der Fall ist. Ist das Ergebnis der Prüfung im Schritt 328 positiv, liegt ein Leitungsfehler vor. Das Einspritzsteuergerät 3 entriegelt sich deshalb im Schritt 330 für eine vorgegebene Zahl, zum Beispiel 3, von Folgestarts, um einen Benutzer zumindest eine vorläufige Weiterbenutzung des Fahrzeugs zu ermöglichen.

Ergibt die Prüfung im Schritt 324 dagegen, daß ein Verriegelungssignal empfangen wurde, sendet das Funktionssteuergerät 3 im Schritt 326 zunächst ein Quittungssignal an das Diebstahlschutzsteuergerät 2 und verriegelt sich im Schritt 226.

Eine weitere vorteilhafte Weiterbildung der anhand der Figuren 3 und 4 beschriebenen Anordnung besteht darin, eine Leitungsdiagnose nicht nur nach Beendigung des Normalbetriebs durch Ausschalten der Zündung, sondern kontinuierlich während des Fahrzeugbetriebs durchzuführen. Dies kann in einfacher Weise zum Beispiel dadurch erfolgen, daß das Diebstahlschutzsteuergerät 2 im Anschluß an den Schritt 130 jeweils die Schritte 118 und 122 ausführt. Stellt das Diebstahlschutzsteuergerät bei einer solchen zyklischen Prüfung im Schritt 122 fest, daß ein Quittungssignal nicht mehr vorliegt, geht es davon aus, daß während des Normalbetriebs ein Fehler in der Datenleitung 1 oder im Funktionssteuergerät 3 aufgetreten ist. Das Diebstahlschutzsteuergerät 2 speichert in diesem Fall in einem im Schaltkreis 29 vorhandenen Permanentspeicher eine entsprechende Fehlermeldung ab, verriegelt sich aber nicht. Es führt stattdessen im Anschluß an das Speichern der Fehlermeldung dennoch die Schritte 124 fortfolgend aus. Zweckmäßig wird das Vorhandensein einer solchen Fehlermeldung dem Benutzer wiederum optisch, vorzugsweise durch eine Leuchte angezeigt. Das Auslesen der Fehlermeldung kann insbesondere durch einen Motortester erfolgen, welcher als externes Gerät 4 an die Datenleitung 1 angeschlossen wird. Korrespondierend zu der zyklischen Wiederholung der Schritte 118 und 122 im Diebstahlschutzsteuergerät 2 führt das Funktionssteuergerät 3 während des Normalbetriebs im Anschluß an den Schritt 220 zyklisch die Schritte 206 bis 214 aus. Ergibt eine der Prüfungen in den Schritten 206 bis 210, daß ein Fehler vorliegt, führt dies allerdings nicht zu einer Verriegelung des Funktionssteuergeräts 3. Stattdessen speichert es, analog zum Diebstahlschutzsteuergerät 2 eine Fehlermeldung in einem Permanentspeicher ab, welche ebenfalls zum Beispiel über einen an die Datenleitung 1 angeschlossenen Motortester als externes Gerät 4 auslesbar ist. Analog zu Schritt 330 entriegelt sich das Funktionssteuergerät zeckmäßig im Falle eines nach vorhergehender richtiger Entriegelung während des Fahrzeugbetriebes festgestellten Fehlers für ein begrenzte Anzahl von Folgestarts, um beispielsweise dem Benutzer die Möglichkeit zu geben, das Fahrzeug in eine Werksatt zu bringen.

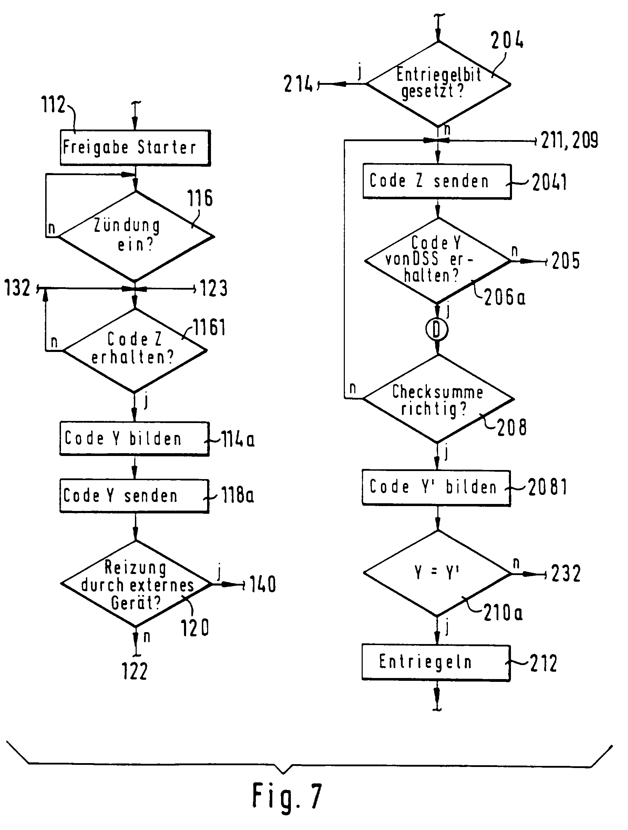

Eine weitere vorteilhafte Weiterbildung der vorstehend beschriebenen Fahrzeugsicherungsanordnung besteht darin, die Ermittlung des Basiscodes Z, im Ausführungsbeispiel der Zufallszahl, nicht im Diebstahlschutzsteuergerät 2, sondern im Funktionssteuergerät 3 durchzuführen. Dies verhindert vor allem, daß eine experimentelle Ermittlung des abgeleiteten Codes Y, etwa durch häufiges Versuchen, über ein unrechtmäßig an die Datenleitung 1 angeschlossenes Diebstahlschutzsteuergerät 2 möglich ist. Ein Flußdiagramm der Variante ist in Figur 7 in der linken Hälfte für das Diebstahlschutzsteuergerät, in der rechten Hälfte für das Funktionssteuergerät dargestellt. Gezeigt sind jeweils Ausschnitte aus den Figuren 3 beziehungsweise 5. Bei einer solchen Anordnung mit gegenüber Figuren 3 und 4 veränderten Funktionalitäten wird der Basiscode Z vom Funktionssteuergerät 3 im Anschluß an Schritt 204 an das Diebstahlschutzsteuergerät 2 gesendet, Schritt 2041. In jenem entfällt Schritt 114, stattdessen prüft es in einem Schritt 1161, ob der Basiscode Z vom Funktionssteuergerät 3 empfangen wurde, bildet, falls dies geschehen ist, anschließend in Schritt 114a aus dem Basiscode Z einen Entriegelungscode Y und sendet diesen ähnlich zu Schritt 118 an das Funktionssteuergerät zurück, Schritt 118a. Trifft ein Basiscode Z nicht ein, kann die Abfrage in Schritt 1161 in einfacher Weise wiederholt werden. Ebenso können für diesen Fall aber auch aufwendigere Maßnahmen vorgesehen sein, wie beispielsweise eine nur begrenzt häufige Wiederholung des Schrittes 1161 mit anschließender Verriegelung. Im Schritt 206a prüft das Funktionssteuergerät 3, ob vom Diebstahlschutzsteuergerät 2 der Entriegelungscode Y eingetroffen ist. Dazu bildet es zweckmäßig selbst in gleicher Weise wie das Diebstahlschutzsteuergerät 2 einen Entriegelungscode Y', Schritt 2081, und vergleicht diesen, ähnlich zu Schritt 210, mit dem erhaltenen Code Y, Schritt 210a.

Zur weiteren Erschwerung einer Manipulation der Sicherheitsanordnung über das Diebstahlschutzsteuergerät 2 ist es besonders im Falle nur eines zu entriegelnden Funktionssteuergeräts 3 ferner vorteilhaft, wenn dieses nicht nur die Erzeugung des Basiscodes 7 durchführt, sondern allgemein die Kontrollfunktion über die Datenleitung 1 ausübt. Ein zusätzlicher Vorteil ergibt sich dabei im Hinblick auf die Funktionsfähigkeit der Anordnung bei störungsbedingetem Wegfall der den Entriegelungzustand anzeigenden Information, im Ausführungsbeispiel des Entriegelbits. Das Funktionssteuergerät 3 fordert in diesem Fall unmittelbar eine erneute Legitimationsprüfung an, um das Entriegelbit neu zu generieren.

Eine weitere zweckmäßige Weiterbildung des zuvor beschriebenen Systems, welche aber auch in Verbindung mit vielen anderen bekannten Fahrzeugsicherheitseinrichtungen vorteilhaft einsetzbar ist, besteht darin, die Möglichkeit vorzusehen, einen Entriegelungscode unter Umgehung des Diebstahlschutzsteuergeräts 2 einzugeben, wenn zum Beispiel im Schritt 123 nach Ablauf des Zeitfensters ein Quittungssignal vom Funktionssteuergerät 3 noch nicht vorliegt. In diesem Fall signalisiert das Diebstahlsteuergerät 2 dem Benutzer vorzugsweise über eine Leuchte oder ein Display, einen Code zur Entriegelung des Funktionssteuergerät 3 manuell unter Umgehung der Datenleitung 1 einzugeben. Dies kann zum Beispiel durch eine vorgegebene Betätigungsfolge des Gaspedals geschehen, welche das Funktionssteuergerät 3 dann erkennt. Der Code kann dabei beispielsweise fahrzeuspezifisch in einem im Funktionssteuergerät vorhandenen Dauerspeicher abgelegt und/oder dem Fahrzeugbesitzer etwa durch Einprägung in den Codeträger 6 oder Eintrag im Kfz-Brief zugänglich sein. Nachfolgend überprüft das Funktionssteuergerät 3, ob der Entriegelungscode richtig eingegeben wurde. Ist dies der Fall, setzt es das Entriegelungsbit und fährt anschließend wie im Normalbetrieb fort. Stellt es dagegen fest, daß ein Entriegelungscode nicht oder falsch eingegeben wurde, verriegelt es sich entsprechend den Schritten 232 bis 236. Die Möglichkeit einer manuellen Entriegelungscode-Eingabe ermöglicht es, ein Fahrzeug auch dann in Betrieb zu nehmen, wenn die Datenleitung 1 zwischen dem Diebstahlsteuergerät 2 und dem Funktionssteuergerät 3 beschädigt ist. Sie erhöht allerdings wiederum die Manipulationsgefahr. Um dem entgegenzuwirken, ist es zweckmäßig, die Eingabe des Entriegelungscodes unter Umgehung der Datenleitung 1 nur zuzulassen, wenn zuvor in einem Betriebszustand nach ordnungsgemäßer Entriegelung im Rahmen einer Leitungsdiagnose ein Fehlerzustand festgestellt und eine entsprechende Information abgespeichert wurde. Gegenwärtig wird die für den vorstehend beschriebenen Gegenstand relevante ISO-Norm 9141 überarbeitet. Als vorgeschlagenes Reizsignal, mittels dessen das externe Gerät 4 einen Übergang der Kontrollfunktionen von dem Diebstahlschutzsteuergerät 2 auf sich bewirkt, soll danach die Verwendung eines 25 Millisekunden langen Low-Pegel-Signals gefolgt von einem 5 Millisekunden langen High-Pegel-Signal mit einer Adressierung entsprechend der Bandrate des Datenaustausches (10,4 K Band) möglich sein. Andere, zum Beispiel Applikationsprotokolle, beginnen ohne langes Low-Pegel-Signal. Wird etwa die Entriegelungskommunikation entsprechend mit zum Beispiel einem 40 Millisekunden dauernden Low-Pegel-Signal mit nachfolgendem 10 Millisekunden langen High-Pegel-Signal begonnen, kann dies eindeutig von allen anderen Protokollarten unterschieden werden.

Unter Beibehaltung des der vorstehend beschriebenen Sicherheitsanordnung zugrundeliegenden Gedankens ergeben sich eine Vielzahl von Ausgestaltungsmöglichkeiten. Viele der Einzelmaßnahmen sind insbesondere nicht auf den Fall beschränkt, daß eine bereits zu anderen Zwecken vorhandene Leitung als Datenleitung 1 zur Durchführung des die Fahrzeugsicherung betreffenden Datenaustausches genutzt wird. So ist es allgemein bei Sicherheitsanorndungen, welcher auf der Durchführung einer Legitimationsprüfung entsprechend 108 bis 122 beruhen, sinnvoll, sicherzustellen, daß ein uneingeschränkter Datenaustausch zwischen den über eine gemeinsame Datenleitung verbundenen Steuergeräten und einem externen Gerät nur möglich ist, wenn diese in der Legitimationsprüfung zuvor entriegelt wurden.

Auch das vorgeschlagene Prinzip zur Durchführung der Legitimationsprüfung, wobei das die Kontrollfunktion ausübende Steuergerät 2, 3, 3', 3'' einen Basiscode Z und einen daraus abgeleiteten Entriegelungscode Y an ein anderes Steuergerät 2, 3, 3', 3'' sendet, dieses in gleicher weise wie das sendende Steuergerät aus dem Basiscode einen Entriegelungscode Y' erzeugt und anschließend beide Codes Y, Y' vergleicht, ist in vielen anderen Sicherheitsanordnungen einsetzbar, welche auf einem Datenaustausch zwischen zwei Steuergeräten zur Legitimationsprüfung beruhen. Desweiteren sind auch die vorgeschlagenen Konzepte der Leitungsprüfung, durch zyklische Durchführung der Legitimationsprüfung während des Fahrzeugbetriebs oder durch Austausch eines Leitungsprüfungssignals 300, 322 mit einem anderen an der zu prüfenden Leitung angeschlossenen Steuergerät in einer Nachlaufphase, nach Ausschalten der Zündung 130 auf andere bekannte, nicht auf der Nutzung der K- und/oder L-Leitung beruhende Sicherheitsanordnungen vorteilhaft übertragbar.

## Patentansprüche

1. Sicherungsanordnung für ein Kraftfahrzeug mit einem Diebstahlschutzsteuergerät (2), das einen Datenaustausch mit einem Funktionssteuergerät (3) führt, um dessen Betriesbereitschaft zu steuern, sowie einer das Diebstahlschutzsteuergerät (2) und das Funktionssteuergerät (3) verbindenden Datenleitung (1), über welche der Datenaustausch erfolgt, und mittels derer weitere Steuergeräte 3', 3'') mit dem Funktionssteuergerät (3) und dem Diebstahlschutzsteuergerät (2) verbindbar sind, wobei eines der über die Datenleitung (1) verbundenen Steuergeräte (2, 3, 3', 3'') die Funktion der Kontrolleinheit zur Führung des Datenaustausches über die Datenleitung (1) wahrnimmt, dadurch gekennzeichnet, daß
- an die Datenleitung (1) ein externes Gerät (4) anschaltbar ist, das zum Austausch von Daten mit wenigstens einem der über die Datenleitung (1) verbundenen Steuergeräte (2, 3, 3', 3'') ausgebildet ist und
- das den Datenaustausch steuernde Steuergerät (2, 3, 3', 3'') bei Erkennen des Vorhandenseins eines externen Gerätes (4) an der Datenleitung (1) die Funktion der Kontrolleinheit zur Führung des Datenaustausches über die Datenleitung (1) an das externe Gerät (4) abgibt.

2. Sicherungsanordnung nach Anspruch 1, dadurch gekennzeichnet, daß als Datenleitung (1) eine im Kraftfahrzeug bereits vorhandene Leitung dient.

3. Sicherungsanordnung nach Anspruch 1, dadurch gekennzeichnet, daß eines der über die Datenleitung (1) verbundenen Steuergeräte (2, 3) die Funktion der Kontrolleinheit zur Führung des Datenaustausches wahrnimmt.

4. Sicherungsanordnung nach Anspruch 1, dadurch gekennzeichnet, daß das externe Gerät (4) im angeschlossenen Zustand von dem den Datenaustausch kontrollierenden Steuergerät (2, 3) die Funktion der Kontrolleinheit übernimmt, um den Datenaustausch mit den durch die Datenleitung (1) verbundenen Steuergeräten (2, 3, 3', 3'') zu führen.

5. Sicherungsanordnung nach Anspruch 1, dadurch gekennzeichnet, daß das externe Gerät (4) einen uneingeschränkten Datenaustausch mit den Steuergeräten (2, 3, 3', 3'' nur führen kann, wenn wenigstens ein Funktionssteuergerät (3, 3', 3'') nach Durchführung eines Datenaustausches zur Legitimationsprüfung (108 bis 122) entriegelt ist.

6. Sicherungsanordnung nach Anspruch 3, dadurch gekennzeichnet, daß das die Funktion der Kontrolleinheit wahrnehmende Steuergerät (2, 3, 3', 3'') das Vorhandensein eines externen Gerätes (4) an einem vorbestimmten Reizsignal erkennt, welches das externe Gerät (4) nach Anschluß an die Datenleitung (1) in diese einspeist.

7. Sicherungsanordnung nach Anspruch 6, dadurch gekennzeichnet, daß das Diebstahlschutzsteuergerät (2) einen Schalter (23) aufweist, mittels dessen es nach Erkennen eines von einem externen Gerät (4) in die Datenleitung (1) eingespeisten Reizsignals eine Einrichtung zur Steuerung des Datenaustausches (21, 22) über die Datenleitung (1) abtrennt.

8. Sicherungsanordnung nach Anspruch 1, dadurch gekennzeichnet, daß das Diebstahlschutzsteuergerät nach Erkennen des Anschlusses eines externen Gerätes (4) an die Datenleitung (1) ein Signal speichert (160), aufgrund dessen zumindest eine einmalige nachfolgende Inbetriebnahme des Fahrzeuges ohne Durchführung eines Datenaustausches zur Legitimationsprüfung (108 bis 122) möglich ist.

9. Fahrzeugsicherungsanordnung nach Anspruch 3, dadurch gekennzeichnet, daß das die Funktion der Kontrolleinheit wahrnehmende Steuergerät (2, 3, 3', 3'') die Funktionsfähigkeit der Datenleitung (1) überwacht, indem es nach Ausschalten der Zündung (130) ein Leitungsüberwachungssignal an wenigstens ein anderes Steuergerät (2, 3, 3', 3'') schickt (300), und das Eintreffen eines Quittungssignals prüft (302).

10. Sicherungsanordnung nach Anspruch 1, dadurch gekennzeichnet, daß im Falle eines fehlerhaften Datenaustausches zwischen Diebstahlschutzsteuergerät (2) und Funktionssteuergerät (3, 3', 3'' ein Code zur Entriegelung der Steuergeräte (3, 3', 3'') manuell unter Umgehung des Diebstahlschutzsteuergerätes (2)eingebbar ist.

## Claims

1. Security arrangement for a motor vehicle having an anti-theft control unit (2) which exchanges data with a function control unit (3) in order to control its operational capability, and a data line (1) which connects the anti-theft control unit (2) and the function control unit (3) and over which the data are exchanged and by means of which further control units (3', 3'') can be connected to the function control unit (3) and to the anti-theft control unit (2), one of the control units (2, 3, 3', 3'') which are connected over the data line (1) performing the function of the supervisory unit for exchanging data over the data line (1), characterized in that
- an external unit (4) which is designed to exchange data with at least one of the control units (2, 3, 3', 3'') which are connected over the data line (1) being capable of being connected to the data line (1), and
- when the presence of an external unit (4) is detected on the data line (1), the control unit (2, 3, 3', 3'') which controls the exchange of data outputs the function of the supervisory unit for exchanging data over the data line (1) to the external unit (4).

2. Security arrangement according to Claim 1, characterized in that a line which is already present in the motor vehicle is used as the data line (1).

3. Security arrangement according to Claim 1, characterized in that one of the control units (2, 3) which are connected over the data line (1) performs the function of the supervisory unit for exchanging data.

4. Security arrangement according to Claim 1, characterized in that in the connected state the external unit (4) takes over, from the control unit (2, 3) which controls the exchange of data, the function of the supervisory unit in order to exchange data with the control units (2, 3, 3', 3'') which are connected by the data line (1).

5. Security arrangement according to Claim 1, characterized in that the external unit (4) can exchange data with the control units (2, 3, 3', 3'') in an unrestricted way only if at least one function control unit (3, 3', 3'') is released after carrying out an exchange of data for legitimization testing (108 to 122).

6. Security arrangement according to Claim 3, characterized in that the control unit (2, 3, 3', 3''), which performs the function of the supervisory unit, detects the presence of an external unit (4) at a predetermined excitation signal which the external unit (4) feeds into the data line (1) after being connected to it.

7. Security arrangement according to Claim 6, characterized in that the anti-theft control unit (2) has a switch (23) by means of which, after detecting an excitation signal which has been fed into the data line (1) by an external unit (4), it disconnects a device for controlling the exchange (21, 22) of data over the data line (1).

8. Security arrangement according to Claim 1, characterized in that, after detecting the connection of an external unit (4) to the data line (1), the anti-theft control unit stores (160) a signal, on the basis of which at least one single, subsequent activation of the vehicle is possible without carrying out an exchange of data for legitimization testing (108 to 122).

9. Vehicle security arrangement according to Claim 3, characterized in that the control unit (2, 3, 3', 3''), which performs the function of the supervisory unit, monitors the functional capability of the data line (1) by sending (300) a line monitoring signal to at least one other control unit (2, 3, 3', 3'') after the ignition (130) has been switched off, and by testing (302) the arrival of an acknowledgement signal.

10. Security arrangement according to Claim 1, characterized in that, in the event of an errored exchange of data between anti-theft control unit (2) and function control unit (3, 3', 3'') a code for releasing the control units (3, 3', 3'') can be entered manually, bypassing the anti-theft control unit (2).

## Revendications

1. Dispositif de protection d'un véhicule comprenant un appareil de commande de protection antivol (2) qui exécute un échange de données avec un appareil de commande de fonction (3) pour en commander la préparation au fonctionnement ainsi qu'une ligne de données (1) reliant l'appareil de commande de protection antivol(2) et l'appareil de commande de fonction (3), ligne par laquelle se fait l'échange des données et à l'aide de laquelle d'autres appareils de commande (3', 3'') peuvent être reliés à l'appareil de commande de fonction (3) et à l'appareil de commande de protection antivol (2), l'un des appareils de commande (2, 3, 3',3'') reliés par la ligne de données (1), assurant la fonction d'unité de contrôle pour exécuter l'échange de données par l'intermédiaire de la ligne de données (1),
caractérisé en ce que
• un appareil externe (4) peut être branché sur la ligne de données (1), cet appareil étant réalisé pour échanger des données avec au moins un appareil de commande (2, 3, 3', 3'') relié par la ligne de données (1) et
• l'appareil de commande (2, 3, 3', 3'') qui commande l'échange des données, reconnaissant la présence d'un appareil externe (4), sur la ligne de données (1), assure la fonction de l'unité de commande pour effectuer l'échange de données par la ligne de données (1) vers l'appareil externe (4).

2. Dispositif de protection selon la revendication 1,
caractérisé en ce que
la ligne de données (1) est une ligne déjà existante dans le véhicule automobile.

3. Dispositif de protection selon la revendication 1,
caractérisé en ce que
l'un des appareils de commande (2, 3) reliés par la ligne de données (1) assure la fonction d'unité de contrôle pour exécuter l'échange de données.

4. Dispositif de protection selon la revendication 1,
caractérisé en ce que
l'appareil externe (4) à l'état branché de l'appareil de commande (2, 3) contrôlant l'échange de données, assure la fonction de l'unité de contrôle pour conduire l'échange de données avec les appareils de commande (2, 3, 3', 3'') reliés par la ligne de données (1).

5. Dispositif de protection selon la revendication 1,
caractérisé en ce que
l'appareil externe (4) ne peut conduire un échange illimité de données avec les appareils de commande (2, 3, 3', 3''), que si au moins un appareil de fonction (3, 3', 3'') est déverrouillé après l'exécution d'un échange de données pour une vérification d'autorisation (108 à 122).

6. Dispositif de protection selon la revendication 3,
caractérisé en ce que
l'appareil de commande (2, 3, 3', 3'') qui assure la fonction de l'unité de contrôle reconnaît la présence d'un appareil externe (4) par un signal d'excitation prédéterminé que cet appareil externe (4) injecte dans la ligne de données (1) après son branchement.

7. Dispositif de protection selon la revendication 7,
caractérisé en ce que
l'appareil de commande de protection antivol(2) comporte un interrupteur (23) à l'aide duquel, après la reconnaissance d'un signal d'excitation injecté par un appareil externe (4) dans la ligne de données (1), coupe une installation de commande de l'échange de données (21, 22) par la ligne de données (1).

8. Dispositif de protection selon la revendication 1,
caractérisé en ce que
l'appareil de commande de protection antivol (2), après avoir reconnu le branchement d'un appareil externe (4) sur la ligne de données (1), mémorise un signal (160) à l'aide duquel au moins une mise en route unique, suivante, du véhicule est possible sans exécution d'un échange de données pour la vérification d'autorisation (108 à 122).

9. Dispositif de protection selon la revendication 3,
caractérisé en ce que
l'appareil de commande (2, 3, 3', 3'') qui assure la fonction de l'unité de contrôle, surveille l'aptitude au fonctionnement de la ligne de données (1), en ce qu'après la coupure de l'allumage (130) il envoie (300) un signal de surveillance de ligne à au moins un autre appareil de commande (2, 3, 3', 3'') et vérifie la réception d'un signal d'accusé de réception (302).

10. Dispositif de protection selon la revendication 1,
caractérisé en ce que
dans le cas d'un échange de données défectueux entre l'appareil de commande de protection antivol (2) et l'appareil de commande de fonction (3, 3', 3''), un code de déverrouillage de l'appareil de commande (3, 3', 3'') peut être introduit manuellement en contournant l'appareil de commande de protection antivol (2).
